# EUROPÄISCHE PATENTSCHRIFT

(11) **EP 0 599 780 B1**
(45) Veröffentlichungstag und Bekanntmachung des Hinweises auf die Patenterteilung: **05.06.1996**
(21) Anmeldenummer: 93810770.3
(22) Anmeldetag: 09.11.1993
(51) Int. Cl.: G02B 6/38, H01R 13/633, H01R 13/627

(54) **Steckverbindung für Lichtwellenleiter**
Connector for optical light guide
Connecteur pour guide d'onde optique

(30) Priorität: 26.11.1992 CH 3622/92
(43) Veröffentlichungstag der Anmeldung: 01.06.1994
(73) Patentinhaber: DIAMOND S.A., CH-6616 Losone-Locarno (CH)
(72) Erfinder: De Marchi, Silverio, CH-6646 Contra (CH)
(74) Vertreter: Wenger, René

(56) Entgegenhaltungen:
- EP-A- 0 153 249
- DE-U- 8 716 076
- DE-U- 8 908 517
- GB-A- 1 587 062
- US-A- 4 268 115
- US-A- 4 747 656
- US-A- 5 101 463
- DIN 47295

## Beschreibung

Die Erfindung betrifft eine Steckverbindung für Lichtwellenleiter gemäss dem Oberbegriff von Anspruch 1. Steckverbindungen mit einer derartigen Einrastvorrichtung haben die Eigenschaft, dass sie Zugbelastungen am Kabel aufnehmen können und dass ein Lösen der Steckverbindung nur möglich ist, wenn eine Zugkraft auf das Steckergehäuse ausgeübt wird. Diese sogenannten Push/Pull-Stecker sind seit einiger Zeit bekannt und gebräuchlich und werden primär bei Gehäusedurchführungen eingesetzt.

Durch die US-A-5,101,463 ist eine gattungsmässig vergleichbare Steckverbindung bekannt geworden, bei welcher die Einrastvorrichtung zwei parallel angeordnete, radial federnde Zungen aufweist. Am freien Ende jeder Zunge ist eine Öffnung angeordnet, welche über einen Nocken am Buchsenteil geschnappt werden kann. Das Steckergehäuse ist an seinem offenen Ende mit nach innen gerichteten Rampen versehen, so dass durch Zurückziehen des Steckergehäuses die beiden Zungen gespreizt und damit aus den Nocken am Buchsenteil gehoben werden können.

Radial federnde und parallele Zungen dienen auch bei der Steckverbindung gemäss US-A-4,268,115 als Einrastvorrichtung. An den Enden der Zungen sind nach aussen gerichtete Sperrklinken angeordnet, welche in eine umlaufende Innennut am Buchsenteil greifen können. Zum Lösen der Sperrklinken werden diese mit Hilfe des Steckergehäuses nach innen gepresst. Auf ähnliche Weise erfolgt das Verriegeln und Lösen des Steckerteils bei der GB-A-1,587,062, wobei dort über den Umfang verteilt drei Zungen bzw. Sperrklinken vorgesehen sind, welche miteinander verbunden sind.

EP 0 153 249 beschreibt eine ähnliche Steckverbindung, bei der eine Sperrvorrichtung sowohl beim Einstecken, wie auch beim Ausstecken mit Hilfe eines Überwurfringes eigens betätigt werden muß.

Die Push/Pull-Stecker der bekannten Bauart wurden nur bei speziellen Anwendungszwecken eingesetzt, bei denen die Abmessungen keine wesentliche Rolle spielen oder bei denen nur kleine Stückzahlen gefertigt wurden. Bei den Buchsenteilen gemäss DIN-Norm werden die Steckerstifte durch eine schwimmend gelagerte Buchse aufeinander zentriert. Für eine Verriegelung innerhalb der Bohrung am Buchsenteil ist daher kein Platz vorhanden. Aber auch parallele Zungen etwa gemäss der US-A-5,101,463 sind bei derartigen Buchsenteilen nicht brauchbar, da der Aussenumfang rotationssymmetrisch ausgebildet ist und da kein Platz für Verriegelungsnocken oder dergleichen vorhanden ist.

Es ist daher eine Aufgabe der Erfindung, eine Steckverbindung der eingangs genannten Art zu schaffen, bei welcher die Bauteile auf kleinstem Raum untergebracht sind und bei der äusserlich keine störenden Konstruktionselemente in Erscheinung treten. Die Sperrklinken sollen aussen am Buchsenteil angreifen, wobei letzteres freibleibt für das Durchschieben durch Bohrungen in einer Gehäusewand oder für das Aufschrauben von Befestigungsmuttern oder dergleichen. Diese Aufgabe wird erfindungsgemäss mit einer Steckverbindung gelöst, welche die Merkmale im Anspruch 1 aufweist. Die Verlegung der Sperrklinken ins Innere des Steckerteils bewirkt zunächst einmal, dass am Buchsenteil mit Ausnahme einer Aussennut zum Einrasten der Sperrklinken, keinerlei Bauteile erforderlich sind, um das Push/Pull-System zu realisieren. Das Steckerteil trägt somit nicht nur das Mittel zum Lösen der Sperrklinken, sondern gleich auch die Sperrklinken selbst. Die Sperrklinken sind jedoch vom Steckergehäuse verdeckt und von aussen nicht sichtbar.

Die Sperrklinken sind an den Enden von federnden Zungen angeordnet, welche vorzugsweise einstückig mit einem Ring ausgebildet sind. Diese Zungen erstrecken sich parallel zum Steckerstift und sie lassen sich auf kleinstem Raum unterbringen, weil sie zusammen mit den Sperrklinken selber als Kreisringsektoren ausgebildet sind. Dadurch wird auch eine ausreichende Angriffsfläche an der Aussennut gewährleistet. Eine vorteilhafte Fixierung ergibt sich, wenn um den Steckerstift vier Zungen angeordnet sind. Dabei muss jede einzelne Sperrklinke nur einen sehr geringen Weg zurücklegen, bis sie ausser Eingriff mit der Aussennut gelangt.

Als Spreizmittel ist am Steckergehäuse ein Keilring angeordnet, der sich gegen die von der Stirnseite des Steckerstifts abgewandte Seite verjüngt und der die Sperrklinken untergreift. Bei einer axialen Relativverschiebung des Steckergehäuses werden dabei die Sperrklinken mit dem Keilring aus der Aussennut herausgehoben. An der Innenwand des Steckergehäuses können dabei zusätzlich eine oder mehrere Längsrippen angeordnet sein, die zwischen die federnden Zungen greifen. Damit ist auch eine Verdrehsicherung gewährleistet.

Das im Rahmen der Erfindung vorgeschlagene Buchsenteil nach Anspruch 7 ist neben der Aussennut auch mit einem durchgehenden Gewinde versehen. Dadurch ist es möglich, dass das Buchsenteil sowohl für eine erfindungsgemässe Steckverbindung, als auch für eine konventionelle Steckverbindung mit aufschraubbarer Überwurfmutter eingesetzt werden kann. Bei vielen bestehenden Geräten muss somit nur das relativ einfache Buchsenteil ausgewechselt oder nachgearbeitet werden, damit zwei verschiedene Kategorien von Steckerteilen beliebig angeschlossen werden können.

Weitere Vorteile und Einzelmerkmale der Erfindung ergeben sich aus der nachfolgenden Beschreibung eines Ausführungsbeispiels und aus den Zeichnungen. Es zeigen:
Figur 1 einen Querschnitt durch ein Steckerteil,
Figur 2 einen Querschnitt durch ein Buchsenteil,
Figur 3 eine erfindungsgemässe Steckverbindung im Teilquerschnitt im eingerasteten Zustand,
Figur 4 einen Querschnitt durch das Steckergehäuse beim Steckerteil gemäss Figur 1,
Figur 5 einen Querschnitt durch die Ebene A-A gemäss Figur 4,
Figur 6 eine axiale Draufsicht auf einen mit Zungen und Sperrklinken versehenen Ring, und
Figur 7 einen Längsschnitt durch den Ring gemäss Figur 6.

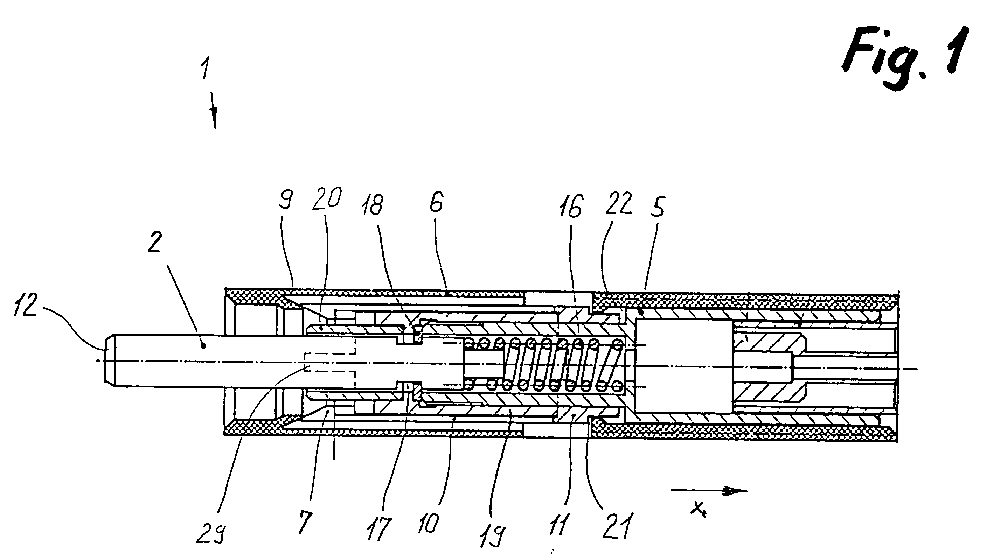

Figur 1 zeigt ein Steckerteil 1 mit den wesentlichen Bauteilen, nämlich mit einer allgemein mit 5 bezeichneten Stifthalterung, mit einem Steckergehäuse 6 und mit einem Steckerstift 2, der mit Hilfe einer Druckfeder 16 axial federnd in der Stifthalterung 5 gehalten ist. Das eigentliche Lichtwellenleiterkabel, das durch die Druckfeder zum Steckerstift 2 führt und allenfalls weitere Bauteile wie Knickschutz usw., sind hier der Einfachheit halber nicht dargestellt.

Der Steckerstift 2 hat auf sich gegenüberliegenden Seiten parallele Ausnehmungen 17, die einerseits als Wegbegrenzung für den axialen Federweg und anderseits zur Festlegung der relativen Drehlage des Steckerstifts dienen. Eine mit Hilfe einer Befestigungshülse 19 festgeklemmte, etwa U-förmige Gabel 18, greift in die Ausnehmungen 17 und hält so den Steckerstift 2 in einer bestimmten Position. Bei einem Druck auf die Stirnseite 12 des Steckerstifts kann sich dieser gegen die Kraft der Druckfeder 16 um ein geringes Mass relativ zur Stifthalterung 5 verschieben. Eine Führungshülse 20 dient dazu, das Steckerteil im Buchsenteil zu führen und gleichzeitig die relative Drehlage des ganzen Steckerteils zum Buchsenteil festzulegen.

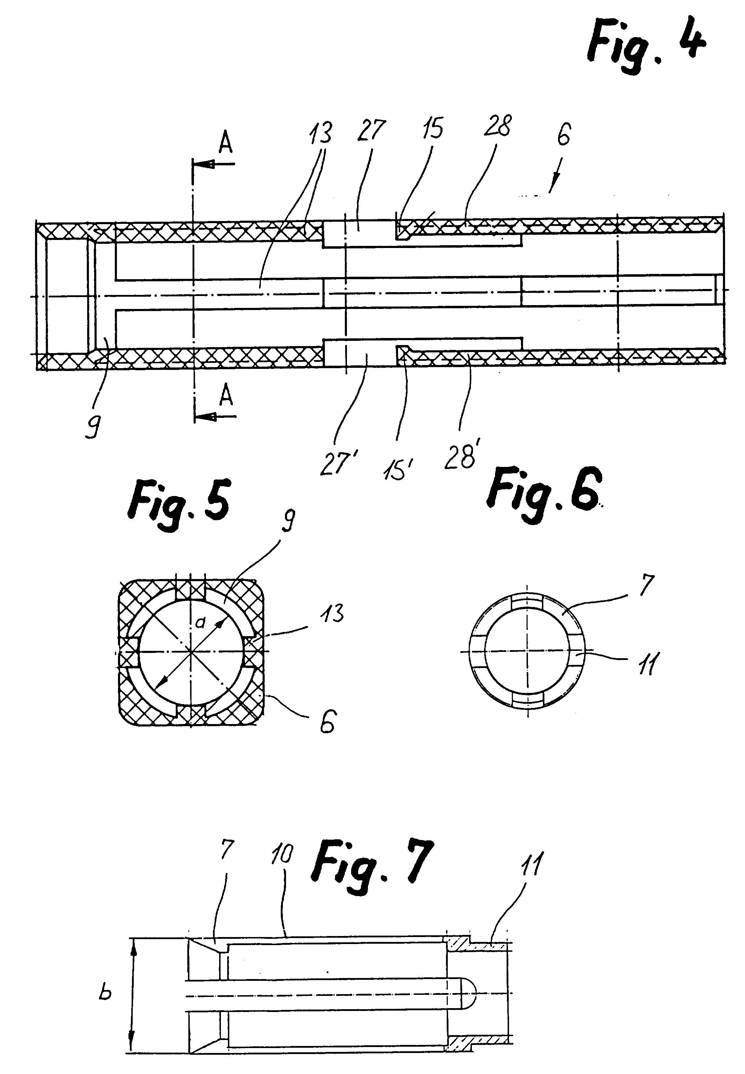

Die radial nach aussen aufspreizbaren Sperrklinken 17 sind am Ende von federnden Zungen 10 angeordnet, welche wiederum einstückig mit einem Ring 11 ausgebildet sind. Wie insbesondere aus den Figuren 6 und 7 ersichtlich ist, werden die Zungen eigentlich durch einen längsgeschlitzten Ring gebildet, so dass auch die Zungen und die Sperrklinken im Querschnitt Kreisringsektoren bilden. Die Sperrklinken 7 sind in Längsrichtung keilförmig ausgebildet. Anstelle der im Ausführungsbeispiel dargestellten vier Einzelzungen, könnten natürlich auch nur zwei Zungen oder mehr als vier Zungen vorhanden sein. Der hintere Abschnitt des Rings 11 bildet gleichzeitig eine Schulter 21 zur Begrenzung der Axialbewegung des Stekkergehäuses 6.

Das Steckergehäuse 6 hat aussen einen etwa quadratischen Querschnitt, wie aus Figur 5 hervorgeht. Der Innenraum ist zur Aufnahme der Stifthalterung etwa zylindrisch ausgebildet. Im vorderen, der Stirnseite 12 des Steckerstifts zugewanden Bereich ist ein umlaufender Keilring 9 angeordnet, dessen Keil sich im Querschnitt in Richtung von der Stirnseite 12 weg nach hinten verjüngt. Der Durchmesser a an der Keilspitze des Keilrings 9 ist dabei etwas kleiner als der Durchmesser b an den Keilspitzen der Sperrklinken 7 (Figuren 5 und 7). Auf diese Weise kann der Keilring 9 bei einer Relativbewegung des Steckergehäuses 6 in Pfeilrichtung x die Sperrklinken radial nach aussen in Pfeilrichtung y aufspreizen.

Zur Begrenzung der Relativbewegung des Steckergehäuses sind an gegenüberliegenden, parallelen Seitenwänden Begrenzungselemente 15, 15' angeordnet. Diese Begrenzungselemente ragen in die umlaufende Aussennut, welche durch die beiden Schultern 21 und 22 an der Stifthalterung 5 gebildet wird. Um die Stifthalterung überhaupt in das Steckergehäuse einführen zu können, sind die beiden Begrenzungselemente federnd ausgebildet. Die Federung kann dadurch erreicht werden, dass durch Aussparungen 27, 27' im Steckergehäuse Materialzungen 28 gebildet werden, an deren Enden die Begrenzungselemente angeordnet sind. Beim Einschieben der fertig montierten Stifthalterung 5 werden die Begrenzungselemente 15, 15' nach aussen gedrückt, was durch eine innenseitige Anschrägung erleichtert wird. Beim Erreichen der richtigen Position rasten die Begrenzungselemente zwischen den umlaufenden Schultern 21 und 22 ein. Die Schulter 21 bildet einen Anschlag für die vorderste Position des Steckergehäuses 6, während die hinterste Position durch den Keilring 9 an den Sperrklinken 7 begrenzt wird. Die Schulter 22 hat keine spezifische Funktion.

Ausgehend vom Keilring 9 sind an der Innenwand des Steckergehäuses 6 auch vier Längsrippen 13 angeordnet, welche in die Zwischenräume zwischen den Zungen 10 eingreifen.

In Figur 2 ist ein typisches Buchsenteil 3 dargestellt. Es besteht aus einer hohlzylindrischen Aussenhülse 24 mit nabenförmigen Enden. An beiden Enden ist je eine umlaufende Aussennut 8 vorgesehen. Ein Positionierschlitz 26 sorgt dafür, dass das Steckerteil nur in einer bestimmten Winkellage eingesteckt werden kann. In der Aussenhülse 24 ist mit radialem und axialem Spiel die eigentliche Buchse 4 gelagert, welche als geschlitzte Hülse ausgebildet ist. Die Buchse 4 wird mit Hilfe eines Sicherungsrings 25 festgehalten. Praktisch über den ganzen Aussenmantel der Aussenhülse 24 erstreckt sich ein Schraubgewinde 14, auf das beispielsweise Gewinderinge 23 oder auch Muttern oder dergleichen geschraubt werden können. Mit Hilfe dieser Gewinderinge kann das Buchsenteil beispielsweise an einer Gehäusewand fixiert werden. Am Gewindeabschnitt 14, unmittelbar im Bereich der Aussennut 8, kann aber beispielsweise auch die Überwurfmutter eines konventionellen Steckers aufgeschraubt werden.

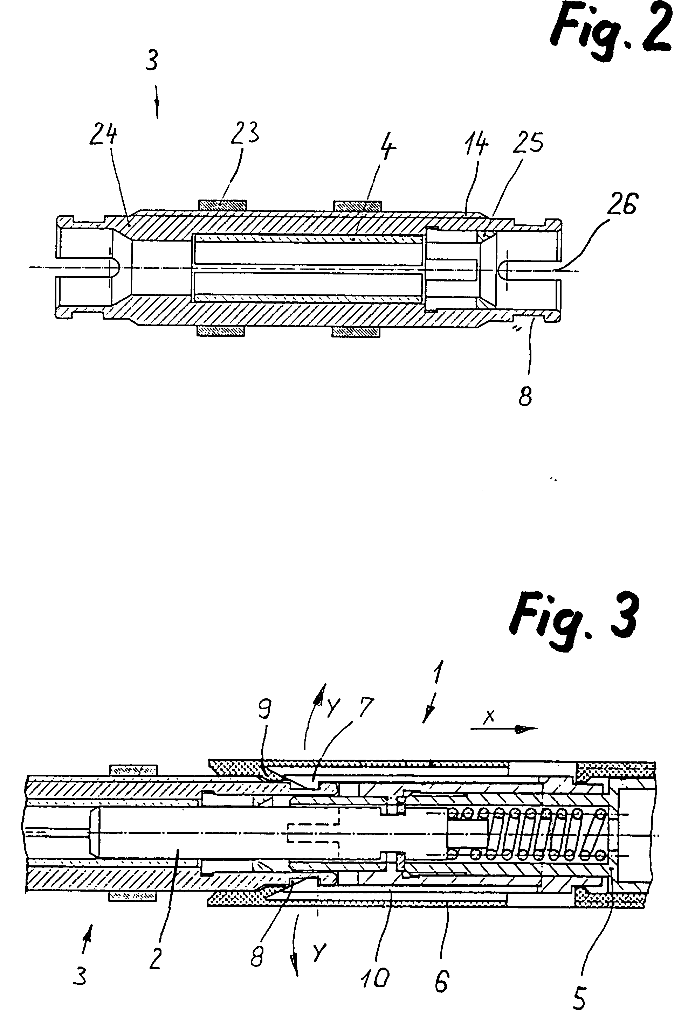

In Figur 3 ist die erfindungsgemässe Steckverbindung im eingesteckten Zustand dargestellt. Der Steckerstift 2 dringt dabei in die Buchse 4 ein, wo seine Stirnseite 12 einem gleichartigen Steckerstift gegenübersteht, der von der andern Seite her eingesteckt wird. Die Führungshülse 20 dringt teilweise ebenfalls in die Aussenhülse 24 ein, wobei eine aufgesetzte Positioniernase 29 in den Positionierschlitz 26 eindringt. Da die Führungshülse 20 bis unter die Aussennut 8 einschiebbar ist, wird eine besonders gute Biegestabilität der Steckverbindung erreicht. Die Sperrklinken 7 sind in die umlaufende Aussennut 8 eingerastet und das Steckergehäuse 6 übergreift teilweise das Buchsenteil 3, so dass von aussen keine Einzelteile der Einrastvorrichtung sichtbar sind.

Bei einer Zugbelastung am hier nicht dargestellten Kabel, welche unmittelbar auf die Stifthalterung 5 übertragen wird, kann die Verriegelung des Steckerteils nicht gelöst werden. Die Sperrklinken 7 übertragen eine derartige Zugbelastung unmittelbar auf das Buchsenteil 3. Lediglich der Steckerstift 2 kann im Rahmen seines axialen Bewegungsspielraums einen geringen Weg zurücklegen, der jedoch durch eine entsprechende Nachlaufbewegung des gegenüberliegenden Steckers kompensiert wird. Eine Unterbrechung des Kontaktes oder auch nur ein Dämpfungsverlust tritt somit nicht ein. Zum Ausstecken des Steckerteils muss das Steckergehäuse 6 in Pfeilrichtung x zurückgezogen werden, wobei der Keilring 9 die Sperrklinken 7 in Pfeilrichtung y aufspreizt. Dadurch werden die Sperrklinken aus der Aussennut 8 gehoben und das ganze Steckerteil kann aus dem Buchsenteil herausgezogen werden.

Das Steckergehäuse 6 ist vorzugsweise aus einem Kunststoffmaterial hergestellt. Die anderen Teile können aus Metall gefertigt sein und der Steckerstift besteht vorzugsweise aus einem sehr harten Material wie z.B. Hartmetall oder Keramik. Einzelne Teile, wie z.B. die Führungshülse 20 in der Befestigungshülse 19, sind unlösbar miteinander verklebt. Das Prinzip der verdrehsicheren und federnden Halterung des Steckerstifts 2 ist bereits in der DE-U-89 08 517.5 beschrieben.

## Patentansprüche

1. Push/Pull-Steckverbindung für Lichtwellenleiter, mit einem Stekkerteil (1), das wenigstens einen Steckerstift (2) und eine Stifthalterung (5) aufweist und mit einem Buchsenteil (3), das wenigstens eine Buchse (4) zur Aufnahme des Steckerstifts aufweist, sowie mit einer auf eine umlaufende Aussennut (8) am Buchsenteil greifende Einrastvorrichtung für die zugfeste Halterung des Steckerstifts in der Buchse, wobei das Steckerteil ein relativ zur Stifthalterung axial verschiebbares Steckergehäuse (6) aufweist und wobei durch Zug am Steckergehäuse die Einrastvorrichtung lösbar ist, dadurch gekennzeichnet,
- dass die Einrastvorrichtung wenigstens vier radial federnde, sich parallel zum Steckerstift erstreckende und mit der Stifthalterung verbundene Zungen (10) aufweist, an deren Enden radial nach aussen aufspreizbare Sperrklinken (7) angeordnet sind,
- dass die Sperrklinken in Längsrichtung keilförmig ausgebildet sind,
- und dass sie zugfest in die Aussennut einrastbar sind,
- dass die Zungen und die Sperrklinken im Querschnitt Kreisringsektoren bilden
- und dass an der Innenwand des Steckergehäuses ein Keilring zum Aufspreizen der Sperrklinken angeordnet ist, der sich gegen die von der Stirnseite des Stekkerstifts abgewandte Seite verjüngt und der die Keilspitzen der Sperrklinken untergreift.

2. Steckverbindung nach Anspruch 1, dadurch gekennzeichnet, dass die Zungen (10) einstückig mit einem Ring (11) ausgebildet sind.

3. Steckverbindung nach einem der Ansprüche 1 oder 2, dadurch gekennzeichnet, dass an der Innenwand des Steckergehäuses (6) wenigstens eine Längsrippe (13) angeordnet ist, die zwischen die federnden Zungen (10) greift.

4. Steckverbindung nach einem der Ansprüche 1 bis 3, dadurch gekennzeichnet, dass das Steckergehäuse wenigstens ein nach innen ragendes Begrenzungselement (15) aufweist, das zum Begrenzen der axialen Relativbewegung mit wenigstens einer Schulter (21) an der Stifthalterung zusammenwirkt.

5. Steckverbindung nach Anspruch 4, dadurch gekennzeichnet, dass das Begrenzungselement radial federnd ausgebildet ist und dass die Stifthalterung gegen die Federkraft des Begrenzungselements in das Steckergehäuse (1) prellbar ist.

6. Steckverbindung nach einem der Ansprüche 1 bis 5, dadurch gekennzeichnet, dass das Steckerteil (1) eine Führungshülse (20) aufweist, welche am Buchsenteil bis unter die Aussennut (8) einschiebbar ist.

7. Buchsenteil für eine optische Steckverbindung mit einem Push/Pull-Stecker,
- mit einer hohlzylindrischen Aussenhülse (24), in der eine Buchse (4) mit radialem und axialem Spiel gehalten ist,
- mit je einer umlaufenden Aussennut (8) an beiden Enden der Aussenhülse,
- wobei die Aussenhülse im Bereich der Aussennut einen grösseren Innendurchmesser aufweist als im Bereich der Buchse und
- mit einem sich zwischen den beiden Aussennuten über die ganze Aussenhülse erstreckenden Aussengewinde (14),
- wobei die Enden der Aussenhülse, das Gewinde und die Aussennuten so ausgebildet und angeordnet sind, dass sowohl die Sperrklinken eines Steckerteils zugfest in die Aussennut einrastbar sind, als auch die Ueberwurfmutter eines Steckerteils auf das Aussengewinde aufschraubbar ist.

8. Buchsenteil nach Anspruch 7, dadurch gekennzeichnet, dass die Aussenhülse an jedem Ende je einen achsparallel verlaufenden Positionierschlitz (26) aufweist, der sich durch die Aussennut hindurch erstreckt.

9. Buchsenteil nach Anspruch 7 oder 8, dadurch gekennzeichnet, dass die Buchse (4) auf einer Seite innerhalb der Aussenhülse mit einem Sicherungsring (25) festgehalten ist.

10. Steckverbindung nach einem der Ansprüche 1 bis 6, gekennzeichnet durch ein Buchsenteil nach einem der Ansprüche 7 bis 9.

## Claims

1. Push/pull plug connector for optical fibers, with a plug portion (1) that possesses at least one plug ferrule (2) and a ferrule holder (5), and with a sleeve portion (3) that possesses at least one sleeve (4) for accommodation of the plug ferrule, as well as with a snap-in device that engages with a circumferential outer groove (8) on the sleeve portion for the tension resistant holding of the plug ferrule in the sleeve, wherein the plug portion possesses a plug housing (6) that is axially displaceable in relation to the ferrule holder and wherein the snap-in device is releasable by means of a tension force applied to the plug housing, characterized in that
- the snap-in device possesses at least four radially sprung tongues (10) extending parallel to the plug ferrule and connected to the ferrule holder, on the ends of which tongues locking catches (7) are arranged that can be splayed outwards,
- in the longitudinal direction the locking catches are wedged-shaped,
- and can be engaged, tension resistant, in the outer groove,
- in cross section, the tongues and the locking catches form annular sectors,
- and a tapered ring for splaying the locking catches is arranged on the inside wall of the plug housing, said tapered ring tapering towards the side oriented away from the facing side of the plug ferrule and engaging beneath the wedge tips of the locking catches.

2. Plug connector according to claim 1, characterized in that the tongues (10) are formed integrally with a ring (11).

3. Plug connector according to one of the claims 1 or 2, characterized in that at least one longitudinal rib (13) is arranged on the inner wall of the plug housing, said rib engaging between the spring-action tongues (10).

4. Plug connector according to claims 1 to 3, characterized in that the plug housing possesses at least one inwardly protruding limit-stop element (15) that coordinates with at least one shoulder (21) on the ferrule holder in order to limit the axial relative movement.

5. Plug connector according to claim 4, characterized in that the limit-stop element is designed with a radial spring action and that the ferrule holder can rebound into the plug housing (1) against the spring force of the limit-stop element.

6. Plug connector according to one of the claims 1 to 5, characterized in that the plug portion (1) possesses a guide bush (20) that can be slid on the sleeve portion into a position beneath the outer groove (8).

7. Sleeve portion for an optical fiber plug connector with a push/pull plug,
- with a hollow cylindrical outer bush (24) in which a sleeve (4) is held with radial and axial play,
- with a circumferential outer groove (8) on both ends of the outer bush,
- wherein the outer bush possesses a greater inside diameter in the area of the outer groove than in the area of the sleeve and
- with an outer thread (14) extending over the entire outer bush between both the outer grooves,
- wherein the ends of the outer bush, the thread and the outer grooves are so designed and arranged that not only the locking catches of one plug portion can be snapped into the outer groove to resist tension, but also the coupling ring of one plug portion can be screwed onto the outer thread.

8. Sleeve portion according to claim 7, characterized in that the outer bush at each end each possesses an axis parallel positioning slot (26) that extends through and beyond the outer groove.

9. Sleeve portion according to claim 7 or 8, characterized in that on one side the sleeve (4) is held fast within the outer bush with a securing ring (25).

10. Plug connector according to one of the claims 1 to 6, characterized by a sleeve portion according to one of the claims 7 to 9.

## Revendications

1. Connecteur push-pull pour fibres optiques, formé d'un élément formant fiche (1) comportant au moins une broche (2) et une fixation de broche (5), d'un élément formant alvéole (3) comportant au moins un alvéole (4) destiné à recevoir la broche, et d'un dispositif d'encliquetage qui agit sur une rainure extérieure circulaire (8) de l'élément formant alvéole et qui est destiné à la fixation résistante à la traction de la broche dans l'alvéole, étant précisé que l'élément formant fiche comporte une enveloppe de fiche (6) mobile axialement par rapport à la fixation de broche et que le dispositif d'encliquetage est apte à être détaché grâce à une traction au niveau de l'enveloppe de fiche, caractérisé
- en ce que le dispositif d'encliquetage comporte au moins quatre languettes (10) qui font ressort radialement, qui sont parallèles à la broche, qui sont reliées à la fixation de broche et aux extrémités desquelles sont disposés des crans d'arrêt (7) aptes à être écartés radialement vers l'extérieur,
- en ce que les crans d'arrêt ont la forme de coins dans le sens longitudinal
- et en ce qu'ils sont aptes à s'encliqueter, résistants à la traction, dans la rainure extérieure,
- en ce que les languettes et les crans d'arrêt forment en section transversale des secteurs d'anneau circulaire,
- et en ce qu'il est prévu, sur la paroi intérieure de l'enveloppe de fiche, une bague de calage destinée à écarter les crans d'arrêt, qui va en s'effilant vers le côté opposé au côté frontal de la broche et qui vient en prise sous les pointes des coins des crans d'arrêt.

2. Connecteur selon la revendication 1, caractérisé en ce que les languettes (10) sont formées d'une seule pièce avec une bague (11).

3. Connecteur selon la revendication 1 ou 2, caractérisé en ce qu'il est prévu, sur la paroi intérieure de l'enveloppe de fiche (6), au moins une nervure longitudinale (13) qui s'engage entre les languettes faisant ressort (10).

4. Connecteur selon l'une des revendications 1 à 3, caractérisé en ce que l'enveloppe de fiche comporte au moins un élément de limitation (15) saillant vers l'intérieur, qui coopère, pour limiter le mouvement relatif axial, avec au moins un épaulement (21) de la fixation de broche.

5. Connecteur selon la revendication 4, caractérisé en ce que l'élément de limitation fait ressort radialement et en ce que la fixation de broche est apte à rebondir dans l'enveloppe de fiche (1) à l'encontre de la force de ressort de l'élément de limitation.

6. Connecteur selon l'une des revendications 1 à 5, caractérisé en ce que l'élément formant fiche (1) comporte une douille de guidage (20) qui est apte à être glissée au niveau de l'élément formant alvéole jusque sous la rainure extérieure (8).

7. Elément formant alvéole pour un connecteur optique pourvu d'une fiche push-pull, comportant
- une douille extérieure cylindrique creuse (24) dans laquelle un alvéole (4) est maintenu avec un jeu radial et axial,
- une rainure extérieure circulaire (8) à chaque extrémité de la douille extérieure,
- étant précisé que dans la zone de la rainure extérieure, la douille extérieure présente un diamètre intérieur plus grand que dans la zone de l'alvéole,
- et un filetage extérieur (14) qui s'étend sur toute la douille extérieure entre les deux rainures extérieures,
- étant précisé que les extrémités de la douille extérieure, le filetage et les rainures extérieures sont conçus et disposés non seulement pour que les crans d'arrêt d'un élément formant fiche soient aptes à s'encliqueter, résistants à la traction, dans la rainure extérieure, mais aussi pour que l'écrou à chapeau d'un élément formant fiche soit apte à être vissé sur le filetage extérieur.

8. Elément formant alvéole selon la revendication 7, caractérisé en ce que la douille extérieure comporte à chaque extrémité une fente de positionnement (26) parallèle à l'axe, qui traverse la rainure extérieure.

9. Elément formant alvéole selon la revendication 7 ou 8, caractérisé en ce que l'alvéole (4) est immobilisé à l'intérieur de la douille extérieure, sur un côté, par une bague d'arrêt (25).

10. Connecteur selon l'une des revendications 1 à 6, caractérisé par un élément formant alvéole selon l'une des revendications 7 à 9.
